(19) Europäisches Patentamt
European Patent Office
Office européen des brevets

(11) **EP 1 848 965 B1**

(12) **FASCICULE DE BREVET EUROPEEN**

(45) Date de publication et mention
de la délivrance du brevet:
**11.06.2008 Bulletin 2008/24**

(21) Numéro de dépôt: **06706544.1**

(22) Date de dépôt: **01.02.2006**

(51) Int Cl.:
*G01C 21/34* (2006.01)      *G08G 1/0969* (2006.01)

(86) Numéro de dépôt international:
**PCT/EP2006/000862**

(87) Numéro de publication internationale:
**WO 2006/082034 (10.08.2006 Gazette 2006/32)**

(54) **PROCEDE ET DISPOSITIF DE DETERMINATION D'ITINERAIRE AVEC POINTS D'INTERET**

VERFAHREN UND VORRICHTUNG ZUR BESTIMMUNG EINER ROUTE MIT ORTEN VON INTERESSE

METHOD AND DEVICE FOR DETERMINING A ROUTE WITH POINTS OF INTEREST

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **07.02.2005 FR 0501187**

(43) Date de publication de la demande:
**31.10.2007 Bulletin 2007/44**

(73) Titulaire: **Société de Technologie Michelin
63000 Clermont-Ferrand (FR)**

(72) Inventeurs:
• **HAYOT, Pierre
  F-92140 Clamart (FR)**
• **RAYNAUD, Michel
  F-94120 Fontenay-sous-Bois (FR)**

(74) Mandataire: **Dequire, Philippe Jean-Marie Denis
23, Place des Carmes-Déchaux
SGD/LG/PI F35 Ladoux
63040 Clermont-Ferrand Cedex 09 (FR)**

(56) Documents cités:
**FR-A- 2 851 042          US-A- 5 948 040
US-A1- 2002 133 292          US-B1- 6 567 743**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne d'une part un procédé de détermination d'itinéraires pour système numérique de cartographie dans lequel, sur la base d'un itinéraire principal permettant de relier un point de départ, sélectionné dans une base de donnée, à un point d'arrivée, également sélectionné dans une base de données, ledit procédé permettant en outre d'atteindre au moins un point d'intérêt, d'autre part un procédé de sélection de points d'intérêt, pour système numérique de cartographie dans lequel, sur la base d'un itinéraire principal permettant de relier un point de départ, sélectionné dans une base de donnée, à un point d'arrivée, également sélectionné dans une base de données, dans lequel on utilise l'itinéraire global POI, déterminé avec le procédé précédant, pour sélectionner au moins un point d'intérêt. L'invention prévoit également un dispositif de calcul d'itinéraire, un système de cartographie numérique et un logiciel correspondants.

Les méthodes connues d'identification et de présentation de points d'intérêt permettent en général de localiser sur une carte certains points d'intérêt, en fonction de leur proximité géographique directe (c'est-à-dire « à vol d'oiseau ») par rapport à un itinéraire donné.

Une telle approche comporte plusieurs inconvénients pratiques : certains points peuvent être difficiles d'accès depuis l'itinéraire donné. Ainsi par exemple, des points peuvent être situés près d'une autoroute, sans toutefois qu'il y ait de sortie à proximité. Le temps d'accès peut donc être particulièrement long. Des points peuvent être accessibles uniquement après un trajet nécessitant un temps à priori disproportionné par rapport à la distance réelle. On peut retrouver ce genre de situation par exemple lors de franchissement d'un col, ou lors de la traversée d'agglomérations sans voie rapide.

On retrouve aussi des situations où une multiplicité de points sont proposés dans un rayon restreint, ce qui peut causer certaines difficultés à l'utilisateur, qui ne sait plus sur quelle base il peut sélectionner un point parmi un grand nombre de possibilités.

Ces différentes solutions sont en général faciles à mettre en oeuvre, car elles ne prennent pas en compte :

les éventuelles difficultés d'accès ;

du temps additionnel requis entre l'itinéraire principal et le point d'intérêt ;

de la difficulté éventuelle du complément de trajet ;

du sens du trajet.

Les solutions connues ont pour objectif de donner à l'utilisateur un maximum d'informations qu'il devra ensuite traiter/analyser lui-même. Toutefois, dans la plupart des cas, l'utilisateur faisant appel à ce type de service connaît peu ou pas la région en question ou tout au moins les détails du réseau routier. Il peut donc malgré lui effectuer des choix coûteux en temps de trajet ou encore en distance supplémentaire à parcourir. Tous ces facteurs peuvent contribuer à affecter l'itinéraire pré-établi qui se trouve perturbé ou modifié de façon plus importante que ce qu'on aurait pu souhaiter.

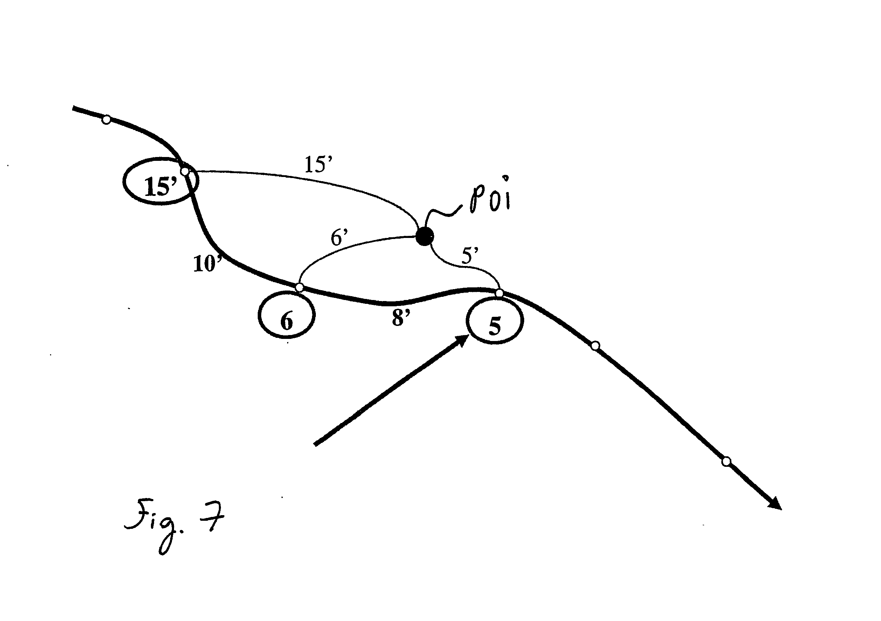

La figure 7 présente un exemple connu de procédé de détermination d'itinéraire, dans lequel on favorise le temps de parcours sur l'itinéraire secondaire afin de sélectionner un itinéraire pour accéder à ce point, à partir d'un itinéraire principal déjà connu. Dans un tel cas, bien que le temps de parcours sur l'itinéraire secondaire soit optimalisé, le parcours global peut entraîner un détour par rapport à un autre itinéraire qui serait dans l'ensemble plus judicieux.

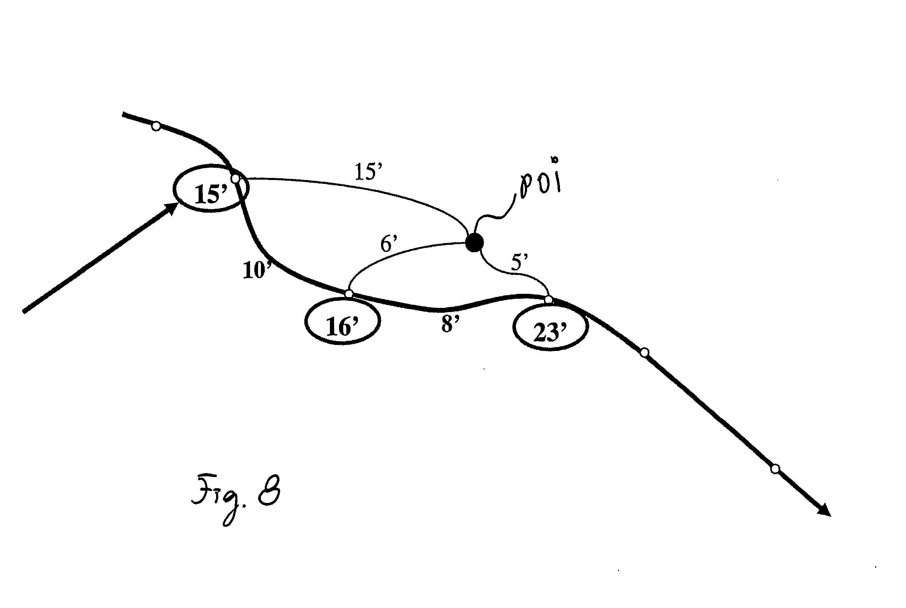

La figure 8 présente un autre exemple connu de procédé de détermination d'itinéraire, dans lequel on favorise le temps de parcours depuis l'origine jusqu'au point d'intérêt afin de sélectionner un itinéraire pour accéder à ce point, à partir d'un itinéraire principal déjà connu. Dans un tel cas, bien que le temps de parcours global soit optimalisé, le temps et/ou la longueur de parcours sur la portion choisie d'itinéraire secondaire peut entraîner un temps ou une distance disproportionné, sur une route pouvant présenter plus de difficultés par rapport à l'itinéraire principal, en opposition avec un autre itinéraire qui serait dans l'ensemble plus judicieux.

Afin d'éviter ces différents inconvénients, et en particulier afin d'identifier les points permettant à l'utilisateur de conserver un itinéraire global optimal, il est proposé un procédé de détermination d'itinéraires pour système de réseau routier numérique stocké sur un support mémoire et comportant une pluralité de tronçons et d'indications de positionnement de ces tronçons, lesdits tronçons étant susceptibles d'être agencés dans une reconstitution d'un réseau routier de façon à former des portions de routes et des carrefours, dans lequel, sur la base d'un itinéraire principal permettant de relier un point de départ, sélectionné dans une base de donnée, à un point d'arrivée, également sélectionné dans une base de données, ledit itinéraire étant constitué de tronçons et éventuellement de noeuds, lesdits tronçons reliant lesdits noeuds, ledit procédé permettant en outre d'atteindre au moins un point d'intérêt (POI) (présent dans une base de données, qu'il s'agisse de la même ou d'une autre) atteignable par une pluralité d'itinéraires secondaires intersectant l'itinéraire principal, on détermine un itinéraire global POI optimal, en effectuant les étapes suivantes :

on évalue, pour chacun des itinéraires secondaires potentiels, un itinéraire global POI sur la base d'au moins les éléments d'itinéraires suivants :

une portion utile d'itinéraire principal et une valorisation correspondante, ladite valorisation étant affectée d'un facteur « k » , la valeur dudit facteur « k » étant comprise entre 0.1 et 0.7, et de préférence entre 0.3 et 0.5;

l'itinéraire secondaire retenu et une valorisation correspondante;

on retient, parmi l'ensemble des itinéraires globaux POI évalués, l'itinéraire global POI dont la valorisation résultante est optimale.

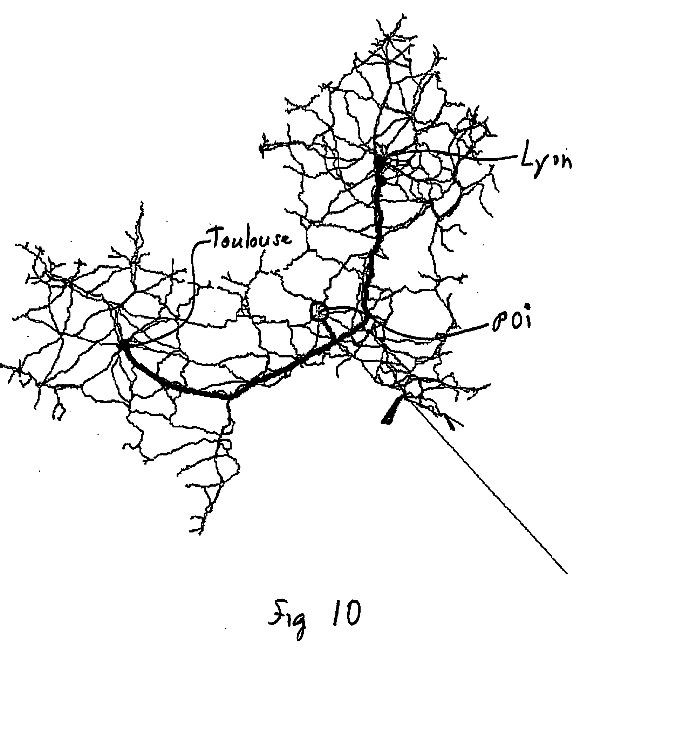

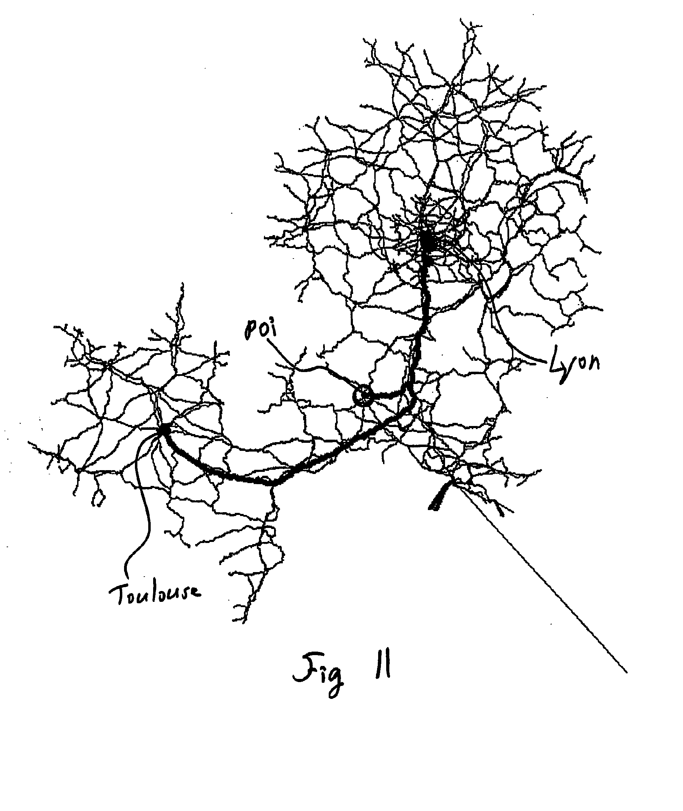

Le présent procédé permet de s'affranchir de l'étape de présélection de POI, par exemple les POI présents dans un rayon donné autour de l'itinéraire, sans tenir compte du fait si ces POI sont ou non reliés au réseau routier en question. Cette suppression de l'étape de présélection permet de réduire de façon considérable le temps de calcul et par le fait même les ressources nécessaires pour effectuer les calculs. Cette particularité de l'invention est bien visible aux figures 10 et 11 où on peut constater que la phase d'exploration du graphe est sensiblement plus restreinte au fur et à mesure que la valeur de k diminue. Les figures 10 et 11 illustrent respectivement les cas où k vaut 0,1 et 0,7. Le nombre de tronçons explorés est plus grand à la figure 11 (pour k=0,7) qu'à la figure 10 (k=0,1). Ceci présente un impact positif direct sur le temps de calcul, les capacités requises pour effectuer ces calculs et les coûts.

Par ailleurs, grâce à ce procédé, on obtient un itinéraire global POI optimal, prenant compte du sens de l'itinéraire principal, et évitant l'obtention de résultats aberrants ou absurdes.

De manière avantageuse, l'itinéraire global POI consiste en une jonction de ladite portion utile d'itinéraire principal et de l'itinéraire secondaire retenu.

La valorisation optimale est de préférence la plus faible. Selon un mode de réalisation avantageux, la valorisation correspond au temps de parcours. La valorisation optimale correspond ainsi au temps de parcours minimum.

Selon un mode de réalisation avantageux, la portion utile de l'itinéraire principal prend son origine au point de départ de l'itinéraire principal.

Selon un autre mode de réalisation avantageux, la portion utile de l'itinéraire principal prend son origine au premier point d'intersection entre l'itinéraire principal et un des itinéraires secondaires potentiels, en tenant compte du sens de l'itinéraire principal.

De manière préférentielle, le réseau numérique comporte également des noeuds, permettant, dans une représentation du réseau routier, de joindre entre eux une pluralité de tronçons.

Selon un mode de réalisation avantageux, afin de déterminer un itinéraire, on identifie une pluralité de routes potentielles à partir desquelles un itinéraire est élu en fonction de critères donnés, l'identification de la pluralité de routes étant effectuée en sélectionnant un premier élément de modélisation du réseau routier, de préférence un noeud, à proximité du point de départ, et un second élément de modélisation du réseau routier, de préférence un noeud, à proximité du point d'arrivée, en identifiant une pluralité de routes, chacune consistant en une pluralité d'éléments de route reliés du premier élément au second élément, et en recherchant au moins un élément intermédiaire pour chacune desdites routes dans ledit ensemble d'éléments de modélisation de réseau routier. Il peut s'agir d'un itinéraire principal et/ou d'un itinéraire secondaire.

De manière avantageuse, on effectue l'exploration des noeuds à l'aide de l'algorithme de Dijkstra. Selon une variante de réalisation, on peut également effectuer l'exploration à l'aide de l'algorithme de FORD.

L'invention prévoit par ailleurs un procédé de sélection de point d'intérêts (POI) pour système numérique de cartographie dans lequel, sur la base d'un itinéraire principal permettant de relier un point de départ, sélectionné dans une base de donnée, à un point d'arrivée, également sélectionné dans une base de données, ledit itinéraire étant constitué de tronçons et éventuellement de noeuds reliant lesdits tronçons, dans lequel on utilise une pluralité d'itinéraires globaux POI, déterminés avec le procédé selon l'une des revendications précédentes, afin de sélectionner une pluralité de POI.

L'invention prévoit également un logiciel comprenant des éléments de code programmés pour la mise en oeuvre des procédés préalablement présentés, lorsque ledit logiciel est chargé dans un système informatique et exécuté par ledit système informatique. Ledit logiciel est avantageusement sous forme de produit enregistré sur un support lisible par un système informatique, comprenant des éléments de code programmés.

L'invention prévoit enfin un dispositif de calcul d'itinéraire, comprenant:

-une unité d'entrée des données, destinée à recevoir, les données associées à un point de départ et celles associées à un point d'arrivée;

-un accès à une unité de stockage comportant un ensemble d'éléments de modélisation d'un réseau routier;

-une unité de calcul agencée pour identifier une pluralité de routes permettant chacune de relier les points de départ et d'arrivée;

-des moyens d'évaluation, permettant d'évaluer, pour une pluralité d'itinéraires secondaires potentiels reliant l'itinéraire principal à au moins un point d'intérêt, un itinéraire global POI sur la base d'au moins les éléments d'itinéraires suivants :

une portion utile d'itinéraire principal et une valorisation correspondante, ladite valorisation étant affectée d'un facteur « k » , la valeur dudit facteur « k » étant comprise entre 0.1 et 0.7, et de préférence entre 0.3 et 0.5;

l'itinéraire secondaire retenu et une valorisation correspondante;

et permettant de retenir, parmi l'ensemble des itinéraires globaux POI évalués, l'itinéraire global POI dont la valorisation résultante est optimale.

Le dispositif comporte de préférence une unité de guidage, agencée de façon à générer des informations de guidage en fonction des éléments cartographiques de la route sélectionnée.

L'invention prévoit finalement un système informatique comprenant un dispositif tel que décrit dans ce qui précède.

Selon diverses variantes de réalisation, la méthode peut servir pour présenter à l'utilisateur, par exemple sur une carte, les différents points d'intérêt identifiés. Les points peuvent aussi être présentés sur une feuille de route (liste d'instructions à suivre pour effectuer un itinéraire prédéterminé). L'utilisateur traite l'information obtenue à son gré et à sa convenance.

Tous les détails de réalisation sont donnés dans la description qui suit, complétée par les figures 1 à 11 dans lesquelles :

-les figures 1 à 6 illustrent un mode préférentiel permettant de déterminer un itinéraire, qu'il s'agisse d'un itinéraire principal ou secondaire, en se basant sur l'algorithme de Dijkstra ;

-les figures 7 et 8 illustrent des exemples de mode de sélection d'itinéraires secondaires de type connus ;

-la figure 9 illustre un exemple d'utilisation du procédé selon l'invention;

-les figures 10 et 11 illustrent les tronçons considérés lors de la mise en oeuvre du procédé selon l'invention avec diverses valeurs de k.

Dans la présente description, les termes suivants sont utilisés notamment avec les significations suivantes :

On désigne « noeud » un point d'intersection entre un premier élément de réseau cartographique ou routier (ou autre réseau) et un second élément d'un tel réseau, notamment l'intersection entre une pluralité de voies routières. Un noeud désigne également un point de changement physique ou qualitatif d'un tronçon, comme par exemple un passage de deux à trois voies, un changement de la limitation de vitesse, une zone (même temporaire) faisant l'objet de travaux, un point de rupture tel une frontière, etc.

On désigne « tronçon », une portion de voie entre deux noeuds.

On désigne un « itinéraire » un sous-ensemble de points issus des éléments de modélisation d'un réseau routier, créant un lien entre des données de façon à leur permettre de modéliser ou représenter un trajet ou parcours sur ledit réseau routier permettant de relier un point de départ et un point d'arrivée. Ce sous-ensemble est constitué par les données relatives aux tronçons permettant de relier le départ et l'arrivée. Par données relatives aux tronçons, on entend les identifications, les longueurs des tronçons et les coordonnées spatiales.

Ce sous-ensemble peut servir à représenter ledit itinéraire sous différentes formes, par exemple au moyen d'une représentation graphique, de préférence sous la forme d'une carte comprenant le point de départ, le point d'arrivée, et les tronçons formant ledit itinéraire, ou sous la forme d'une « feuille de route » ou liste d'instructions, comportant une énumération ou suite d'instructions écrites ou représentées par des pictogrammes, expliquant à un éventuel conducteur d'un véhicule, les différentes étapes à suivre pour effectuer ledit itinéraire.

Le terme POI est tiré de la terminologie courante en langue anglaise « Point Of Interest », d'où POI, qui est utilisé dans ce document.

On désigne « itinéraire principal » l'itinéraire entre le point de départ D et le point d'arrivée A sans tenir compte du point d'intérêt POI ;

On désigne « itinéraire secondaire » l'itinéraire entre l'itinéraire principal et le POI ;

On désigne « itinéraire secondaire potentiel » un des itinéraires secondaires possibles;

On désigne « portion utile d'itinéraire principal » la portion de l'itinéraire principal située entre le point D et un point d'intersection INT entre l'itinéraire principal et un itinéraire secondaire potentiel (le point d'intersection est de préférence un noeud) ;

On désigne «itinéraire global POI» l'itinéraire (à optimiser) comportant une portion d'itinéraire principal et un itinéraire secondaire ;

On désigne «itinéraire secondaire retenu » l'itinéraire secondaire qui est intégré à l'itinéraire global POI optimal et qui permet d'optimiser le trajet vers le point d'intérêt. Cet itinéraire est situé entre le point d'intersection situé à la fin de la « portion utile d'itinéraire principal » et le point d'intérêt.

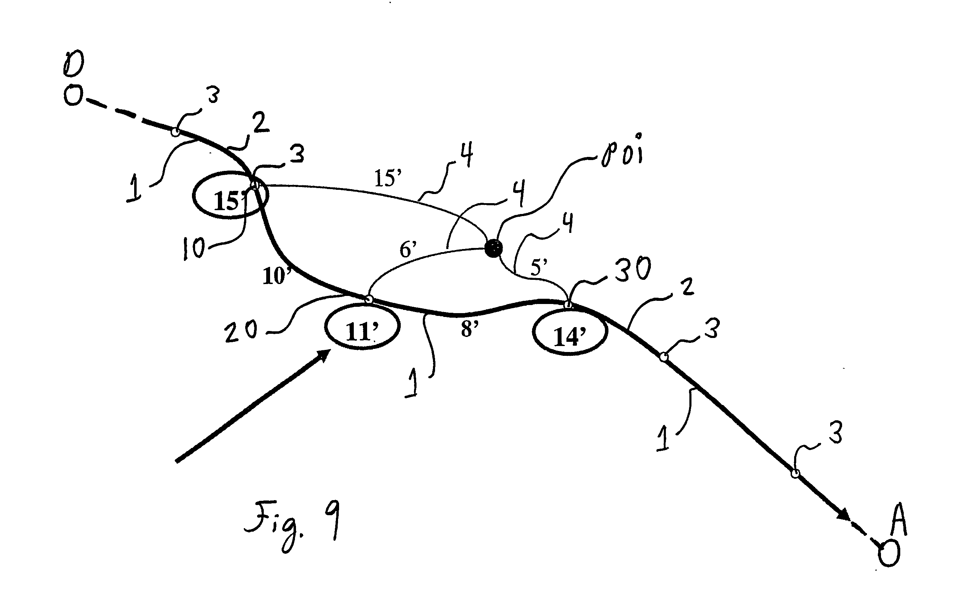

La figure 9 illustre un exemple de calcul d'itinéraire et de sélection de point d'intérêt selon le procédé de l'invention. L'itinéraire principal 1 entre le point de départ D et le point d'arrivée A est soit préalablement établi ou déjà connu. Sur la base de cet itinéraire, un ou plusieurs points d'intérêt POI doivent être identifiés et sélectionnés, en tenant compte de l'itinéraire principal 1 et de ses caractéristiques, notamment de son sens, des temps de parcours des différents tronçons 2 et de la position des noeuds 3.

Dans l'exemple illustré, un point d'intérêt POI est susceptible d'être atteint par l'entremise de trois itinéraires secondaires 4 différents et à partir de noeuds 10, 20 ou 30 distincts. Le procédé permet de déterminer un itinéraire global permettant d'optimiser à la fois l'utilisation de l'itinéraire principal, puisque celui-ci est connu, et l'itinéraire secondaire.

Pour ce faire, les inventeurs ont constaté qu'il est nécessaire de considérer sur des bases différentes les itinéraires principaux et secondaires, ou les valorisations correspondant à ces itinéraires, par exemple avec l'utilisation de la relation suivante:

$$\text{Valorisation (Itinéraire global)} = \text{k X Valorisation (itinéraire principal)}$$

$$+ 1 \text{ X Valorisation (itinéraire secondaire)}$$

k étant compris entre 0,1 et 0,7.

Par ailleurs, des résultats particulièrement avantageux sont obtenus avec l'utilisation d'une valeur de k entre 0,3 et 0,5.

Cette relation est utilisée lors de la détermination de chacun des itinéraires potentiels. Ainsi, pour chacun de ces itinéraires potentiels permettant de rejoindre le point d'intérêt, on évalue un itinéraire global POI. On compare ensuite les valorisations respectives de chacun des itinéraires globaux, et on retient l'itinéraire global dont la valorisation est optimale. Pour effectuer ces opérations, on considère uniquement la portion utile de l'itinéraire principal, c'est-à-dire la portion effectivement utilisée de l'itinéraire principal pour rejoindre l'itinéraire secondaire retenu.

La figure 9 présente les résultats obtenus dans les trois cas susceptibles d'être utilisés dans cet exemple. Tout d'abord, en suivant le sens de l'itinéraire principal -de gauche vers la droite sur la figure, tel qu'indiqué par la flèche à proximité du point d'arrivée-, on détermine la valorisation du premier noeud 10 rencontré. En utilisant des valorisations à partir de ce premier noeud 10, on obtient une première valorisation équivalente à celle de l'itinéraire secondaire, soit 15 minutes. En effet, pour ce premier noeud, l'itinéraire principal n'intervient pas. Pour le second noeud 20, on multiplie la valorisation du tronçon 2 situé entre le premier 10 et le second noeud 20, soit 10 minute, par le facteur k (0,5 dans cet exemple). On ajoute ensuite la valorisation de l'itinéraire secondaire associé, soit 6 minutes, pour obtenir une valorisation d'itinéraire global de 11 minutes.

On effectue un processus similaire pour le troisième noeud 30 : dans ce cas, la valorisation de la portion utile de l'itinéraire principal est de 18 minutes (10' + 8'), et celle de l'itinéraire secondaire est de 5 minutes. En multipliant le facteur k (0,5) à la valorisation de la portion utile d'itinéraire principal, on obtient 9 minutes. La valorisation globale est donc de 14 minutes (9 + 5).

En comparant les trois valorisations globales, on retient la plus avantageuse, de préférence la plus faible, c'est-à-dire celle correspondant au second noeud, à 11 minutes. L'itinéraire secondaire retenu est donc celui entre ce second noeud 20 et le point d'intérêt POI (valorisé à 6').

Les figures 10 et 11 montrent que ce procédé permet non seulement de déterminer un itinéraire global plus avantageux, mais permet surtout de réduire l'envergure des tronçons à considérer, réduisant de ce fait le temps de calcul. Ces figures montrent tous les tronçons qui sont considérés lorsque l'on considère un point d'intérêt POI (Alès) donné le long d'un itinéraire principal entre Lyon et Toulouse. A la figure 10, le facteur k considéré a une valeur de 0,1, tandis qu'à la figure 11, le facteur k a une valeur de 0,7. En comparant ces deux figures, on constate bien que le nombre de tronçons total considéré est très inférieur avec une valeur plus faible de k.

Dans tous ces cas, on utilise de manière avantageuse l'algorithme de Dijkstra afin de déterminer les valorisations des différents noeuds et d'établir les itinéraires potentiels, tant pour la portion utile de l'itinéraire principal que pour l'itinéraire secondaire.

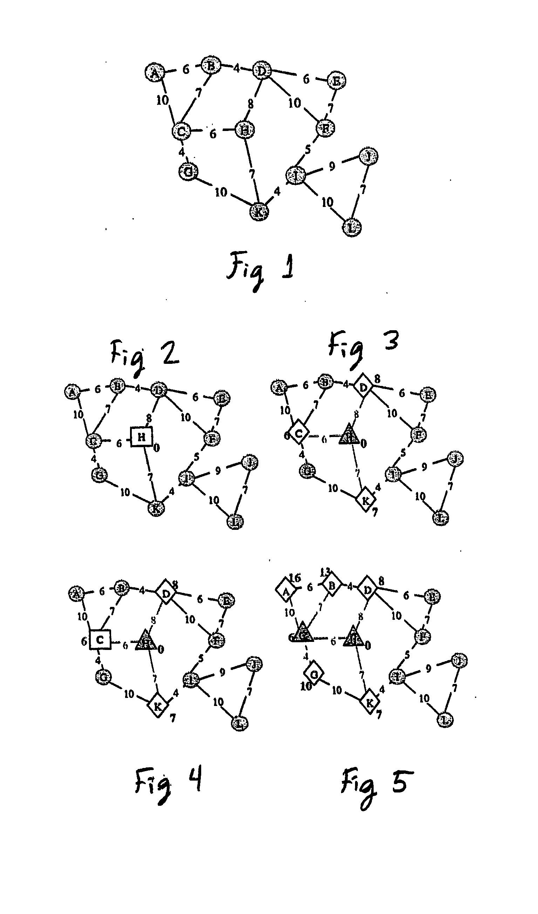

Les figures 1 à 6 illustrent le procédé de détermination d'itinéraire utilisant l'approche de Dijkstra. En fait, différentes approches ainsi que différents algorithmes permettent aujourd'hui de procéder à des calculs d'itinéraires. La présente invention est susceptible d'être utilisées avec un grand nombre d'entre elles. Par exemple, le procédé selon l'invention convient particulièrement à l'algorithme de Dijkstra, largement répandu dans le domaine des calculs d'itinéraires.

De manière générale, selon cette approche, on identifie une pluralité de routes potentielles à partir desquelles un itinéraire est élu en fonction de critères donnés, l'identification de la pluralité de routes étant effectuée en sélectionnant un premier élément de modélisation du réseau routier, de préférence un noeud, à proximité du point de départ, et un second élément de modélisation du réseau routier, de préférence un noeud, à proximité du point d'arrivée, en identifiant une pluralité de routes, chacune consistant en une pluralité d'éléments de route reliés du premier élément au second élément, et en recherchant au moins un élément intermédiaire pour chacune desdites routes dans ledit ensemble d'éléments de modélisation de réseau routier. Il peut s'agir d'un itinéraire principal et/ou d'un itinéraire secondaire.

Les figures 1 à 6 permettent d'illustrer un tel principe. Soit un graphe, tel que celui de la figure 1, représentant le réseau routier, comportant des noeuds reliés entre eux par des tronçons valorisés (distance entre les noeuds) :

On choisit un point de départ (par exemple H) ; l'algorithme de Dijkstra permet de connaître pour chaque noeud la distance la plus courte entre ce noeud et H. Les figures 1 à 6 permettent d'illustrer le fonctionnement de l'algorithme :

Première étape (figure 2) : on valorise à 0 le noeud de départ.

Deuxième étape (figure 3) : on emprunte chaque tronçon quittant le départ et on valorise les noeuds rencontrés.

**EP 1 848 965 B1**

Troisième étape (figure 4) : on sélectionne, parmi les noeuds valorisés, celui dont la valorisation est la plus faible.

Quatrième étape (figure 5): on emprunte tous les tronçons partant du point sélectionné, et on valorise les noeuds rencontrés (première valorisation ou réactualisation).

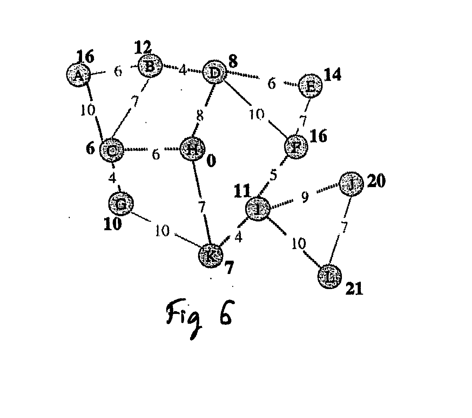

Ainsi de suite, on sélectionnera ensuite K puis, au fur et à mesure, tous les noeuds. Tant qu'un noeud n'est pas définitivement évalué, sa valorisation peut changer. Par exemple, B sera valorisé à 12 via D. A la fin, on obtient le résultat présenté à la figure 6.

Pour le calcul d'itinéraires, on part du point de départ -dans cet exemple, le point H- et on s'arrête dès que le noeud d'arrivée est définitivement évalué. On a ainsi obtenu le meilleur itinéraire. Afin de calculer différents types d'itinéraires possibles, la valorisation associée au tronçon peut dépendre de différents paramètres tels que par exemple :

-le temps de parcours (itinéraire le plus rapide) ;

-la longueur (itinéraire le plus court) ;

-ou une combinaison des deux.

Diverses variantes du procédé selon l'invention peuvent être réalisées ou utilisées. Par exemple, la portion utile de l'itinéraire principal peut prendre son origine au point de départ D de l'itinéraire principal.

Pour s'affranchir du début de l'itinéraire principal, qui n'affecte en général pas les résultats des différentes valorisations des divers itinéraires globaux POI, la portion utile de l'itinéraire principal peut prendre son origine au premier point d'intersection entre l'itinéraire principal et un des itinéraires secondaires potentiels, en tenant compte du sens de l'itinéraire principal.

Le procédé préalablement décrit et illustré sert également de base dans le cadre de la présente invention pour un procédé de sélection de point d'intérêts (POI) pour système numérique de cartographie dans lequel, sur la base d'un itinéraire principal (préalablement établi ou connu) on utilise une pluralité d'itinéraires globaux POI, déterminés avec le procédé précédent, afin de proposer à l'utilisateur une pluralité de POI avec leur modes d'accès respectifs. En effet, le procédé préalablement décrit peut, selon une variante avantageuse, être utilisé avec plusieurs points d'intérêt. On peut alors effectuer les étapes préalablement décrites de façon successive, de façon à obtenir plusieurs itinéraires globaux POI, chacun permettant de conduire à un point d'intérêt différent. On peut également retenir plusieurs itinéraires globaux POI, et laisser l'utilisateur choisir celui qu'il préfère utiliser.

La présente invention prévoit par ailleurs un dispositif de calcul d'itinéraire, comprenant les éléments nécessaires pour la mise en oeuvre du procédé préalablement décrit et illustré. De manière avantageuse, ce dispositif comporte :

-une unité d'entrée des données, destinée à recevoir, les données associées à un point de départ et celles associées à un point d'arrivée;

-un accès à une unité de stockage comportant un ensemble d'éléments de modélisation d'un réseau routier;

-une unité de calcul agencée pour identifier une pluralité de routes permettant chacune de relier les points de départ et d'arrivée;

-des moyens d'évaluation, permettant d'évaluer, pour une pluralité d'itinéraires secondaires potentiels reliant l'itinéraire principal à au moins un point d'intérêt, un itinéraire global POI sur la base d'au moins les éléments d'itinéraires suivants :

une portion utile d'itinéraire principal et une valorisation correspondante, ladite valorisation étant affectée d'un facteur « k » , la valeur dudit facteur « k » étant comprise entre 0.1 et 0.7, et de préférence entre 0.3 et 0.5;

l'itinéraire secondaire retenu et une valorisation correspondante;

et permettant de retenir, parmi l'ensemble des itinéraires globaux POI évalués, l'itinéraire global POI dont la valorisation résultante est optimale.

Il est important de noter que ce principe de sélection d'itinéraire est tout à fait cohérent avec le comportement naturel d'un automobiliste dans une région qu'il connaît peu ou pas : il cherche à éviter les routes de trop faible importance lors de son déplacement, tout en étant néanmoins contraint de les emprunter pour atteindre certains types de POI, ce qui implique qu'il doit s'écarter de l'itinéraire principal préalablement établi.

**Revendications**

1.  Procédé de détermination d'itinéraires pour système de réseau routier numérique stocké sur un support mémoire et comportant une pluralité de tronçons (2) et d'indications de positionnement de ces tronçons, lesdits tronçons étant susceptibles d'être agencés dans une reconstitution d'un réseau routier de façon à former des portions de routes et des carrefours, dans lequel, sur la base d'un itinéraire principal (1) permettant de relier un point de départ (D), sélectionné dans une base de donnée, à un point d'arrivée (A), également sélectionné dans une base de données, ledit itinéraire étant constitué de tronçons (2) et éventuellement de noeuds (3), lesdits tronçons (2) reliant lesdits noeuds (3), ledit procédé permettant en outre d'atteindre au moins un point d'intérêt (POI) atteignable par une pluralité d'itinéraires secondaires (4) intersectant l'itinéraire principal (1), on détermine un itinéraire global POI optimal, en effectuant les étapes suivantes :

• on évalue, pour chacun des itinéraires secondaires potentiels, un itinéraire global POI sur la base d'au moins les éléments d'itinéraires suivants :

• une portion utile d'itinéraire principal et une valorisation correspondante, ladite valorisation étant affectée d'un facteur « k » , la valeur dudit facteur « k » étant comprise entre 0.1 et 0.7, et de préférence entre 0.3 et 0.5;
• l'itinéraire secondaire retenu et une valorisation correspondante ;

• on retient, parmi l'ensemble des itinéraires globaux POI évalués, l'itinéraire global POI dont la valorisation résultante est optimale.

2. Procédé de détermination d'itinéraires selon la revendication 1, dans lequel l'itinéraire global POI consiste en une jonction de ladite portion utile d'itinéraire principal (1) et de l'itinéraire secondaire (4) retenu.

3. Procédé de détermination d'itinéraires selon l'une des revendications précédentes, dans lequel la valorisation optimale est la plus faible.

4. Procédé de détermination d'itinéraires selon l'une des revendications précédentes, dans lequel la valorisation correspond au temps de parcours.

5. Procédé de détermination d'itinéraires selon l'une des revendications précédentes, dans lequel la portion utile de l'itinéraire principal prend son origine au point de départ (D) de l'itinéraire principal.

6. Procédé de détermination d'itinéraires selon l'une des revendications précédentes, dans lequel la portion utile de l'itinéraire principal prend son origine au premier point d'intersection entre l'itinéraire principal et un des itinéraires secondaires potentiels, en tenant compte du sens de l'itinéraire principal.

7. Procédé de détermination d'itinéraires selon l'une des revendications précédentes, dans lequel le réseau comporte également des noeuds (3), permettant, dans une représentation du réseau routier, de joindre entre eux une pluralité de tronçons (2).

8. Procédé de détermination d'itinéraires selon l'une des revendications précédentes, dans lequel afin de déterminer l'itinéraire, on identifie une pluralité de routes potentielles à partir desquelles un itinéraire est élu en fonction de critères donnés, l'identification de la pluralité de routes étant effectuée en sélectionnant un premier élément de modélisation du réseau routier, de préférence un noeud (3), à proximité du point de départ (D), et un second élément de modélisation du réseau routier, de préférence un noeud (3), à proximité du point d'arrivée (A), en identifiant une pluralité de routes, chacune consistant en une pluralité d'éléments de route reliés du premier élément au second élément, et en recherchant au moins un élément intermédiaire pour chacune desdites routes dans ledit ensemble d'éléments de modélisation de réseau routier.

9. Procédé de détermination d'itinéraires selon l'une des revendications 1 à 8, dans lequel l'exploration des noeuds est réalisée à l'aide de l'algorithme de Dijkstra.

10. Procédé de détermination d'itinéraires selon l'une des revendications 1 à 8, dans lequel l'exploration des noeuds est réalisée à l'aide de l'algorithme de FORD.

11. Procédé de sélection de POI pour système numérique de cartographie dans lequel, sur la base d'un itinéraire principal (1) permettant de relier un point de départ (D), sélectionné dans une base de donnée, à un point d'arrivée (A), également sélectionné dans une base de données, ledit itinéraire étant constitué de tronçons (2) et éventuellement de noeuds (3) reliant lesdits tronçons, dans lequel on utilise une pluralité d'itinéraires globaux POI, déterminés avec le procédé selon l'une des revendications précédentes, afin de sélectionner une pluralité de POI.

12. Logiciel comprenant des éléments de code programmés pour la mise en oeuvre du procédé selon l'une des revendications précédentes, lorsque ledit logiciel est chargé dans un système informatique et exécuté par ledit système informatique.

**13.** Logiciel selon la revendication 12, sous forme de produit enregistré sur un support lisible par un système informatique, comprenant des éléments de code programmés.

**14.** Dispositif de calcul d'itinéraire, comprenant:

- une unité d'entrée des données, destinée à recevoir, les données associées à un point de départ et celles associées à un point d'arrivée;
- un accès à une unité de stockage comportant un ensemble d'éléments de modélisation d'un réseau routier;
- une unité de calcul agencée pour identifier une pluralité de routes permettant chacune de relier les points de départ et d'arrivée;
- des moyens d'évaluation, permettant d'évaluer, pour une pluralité d'itinéraires secondaires potentiels reliant l'itinéraire principal à au moins un point d'intérêt, un itinéraire global POI sur la base d'au moins les éléments d'itinéraires suivants :

• une portion utile d'itinéraire principal et une valorisation correspondante, ladite valorisation étant affectée d'un facteur « k » , la valeur dudit facteur « k » étant comprise entre 0.1 et 0.7, et de préférence entre 0.3 et 0.5;
• l'itinéraire secondaire retenu et une valorisation correspondante ;

et permettant de retenir, parmi l'ensemble des itinéraires globaux POI évalués, l'itinéraire global POI dont la valorisation résultante est optimale.

**15.** Dispositif selon la revendication 14, comportant une unité de guidage, agencée de façon à générer des informations de guidage en fonction des éléments cartographiques de la route sélectionnée.

**16.** Système informatique comprenant un dispositif selon l'une des revendications 14 ou 15.

**Claims**

**1.** A method for determining routes for a digital road network system stored on a memory medium and comprising a plurality of sections (2) and of positioning indications for these sections, said sections being capable of being arranged in a reconstruction of a road network so as to form road portions and junctions, in which method, on the basis of a main route (1) connecting a starting point (D), selected from a database, to a finishing point (A), also selected from a database, said route being constructed from sections (2) and possibly nodes (3), said sections (2) connecting said nodes (3), said method furthermore making it possible to reach at least one point of interest (POI) reachable by a plurality of secondary routes (4) intersecting the main route (1), an optimal POI overall route is determined by performing the following steps:

• a POI overall route is evaluated for each of the potential secondary routes on the basis of at least the following route elements:

• a useful portion of main route and a corresponding score, said score being assigned a factor "k", the value of said factor "k" lying between 0.1 and 0.7, and preferably between 0.3 and 0.5,
• the chosen secondary route and a corresponding score;

• the POI overall route whose resulting score is optimal is chosen from the set of evaluated POI overall routes.

**2.** The method for determining routes as claimed in claim 1, in which the POI overall route consists of said useful portion of main route (1) combined with the chosen secondary route (4).

**3.** The method for determining routes as claimed in one of the preceding claims, in which the optimal score is the lowest.

**4.** The method for determining routes as claimed in one of the preceding claims, in which the score corresponds to the journey time.

**5.** The method for determining routes as claimed in one of the preceding claims, in which the origin of the useful portion of the main route is the starting point (D) of the main route.

6.  The method for determining routes as claimed in one of the preceding claims, in which the origin of the useful portion of the main route is the first intersection point between the main route and one of the potential secondary routes, taking account of the direction of the main route.

7.  The method for determining routes as claimed in one of the preceding claims, in which the network also comprises nodes (3), making it possible, in a representation of the road network, to join together a plurality of sections (2).

8.  The method for determining routes as claimed in one of the preceding claims, in which in order to determine the route, a plurality of potential roads is identified from which a route is elected on the basis of given criteria, the identification of the plurality of roads being performed by selecting a first modeling element for the road network, preferably a node (3), in proximity to the starting point (D), and a second modeling element for the road network, preferably a node (3), in proximity to the finishing point (A); identifying a plurality of roads, each consisting of a plurality of connected road elements from the first element to the second element; and searching for at least one intermediate element for each of said roads in said set of road network modeling elements.

9.  The method for determining routes as claimed in one of claims 1 to 8, in which the exploration of the nodes is carried out with the aid of the Dijkstra algorithm.

10. The method for determining routes as claimed in one of claims 1 to 8, in which the exploration of the nodes is carried out with the aid of the FORD algorithm.

11. A POI selection method for a digital mapping system in which, on the basis of a main route (1) connecting a starting point (D), selected from a database, to a finishing point (A), also selected from a database, said route being constructed from sections (2) and possibly nodes (3) connecting said sections, in which a plurality of POI overall routes, determined with the method according to one of the preceding claims, is used to select a plurality of POIs.

12. A piece of software comprising code elements programmed for the implementation of the method as claimed in one of the preceding claims, when said piece of software is loaded into a computer system and executed by said computer system.

13. The piece of software as claimed in claim 12, in the form of a product recorded on a medium readable by a computer system, comprising programmed code elements.

14. Route calculation device, comprising:

    - a data entry unit, intended to receive the data associated with a starting point and those associated with a finishing point;
    - an access to a storage unit comprising a set of elements for modeling a road network;
    - a calculation unit devised to identify a plurality of roads each making it possible to connect the starting and finishing points;
    - evaluation means, making it possible to evaluate, for a plurality of potential secondary routes connecting the main route to at least one point of interest, a POI overall route on the basis of at least the following route elements:

        - a useful portion of main route and a corresponding score, said score being assigned a factor "k", the value of said factor "k" lying between 0.1 and 0.7, and preferably between 0.3 and 0.5;
        - the chosen secondary route and a corresponding score;

    and making it possible to choose, from the set of evaluated POI overall routes, the POI overall route whose resulting score is optimal.

15. The device as claimed in claim 14, comprising a guidance unit devised so as to generate guidance information as a function of the mapping elements of the selected route.

16. A computer system comprising a device as claimed in one of claims 14 or 15.

**Patentansprüche**

1. Verfahren zur Streckenbestimmung für ein digitales Straßennetz, das in einem Speicherträger gespeichert ist und mehrere Teilstrecken (2) und Positionsanzeigen dieser Teilstrecken aufweist, wobei die Teilstrecken in einer Rekonstruktion eines Straßennetzes so angeordnet werden können, dass Abschnitte von Routen und Kreuzungen geformt werden, bei dem auf der Basis einer Hauptstrecke (1), die es ermöglicht, einen Ausgangspunkt (D), der in einer Datenbank ausgewählt wird, mit einem Ankunftspunkt (A) zu verbinden, der ebenfalls in einer Datenbank ausgewählt wird, wobei die Strecke aus Teilstrecken (2) und ggf. Knoten (3) besteht, wobei die Teilstrecken (2) die Knoten (3) verbinden, wobei das Verfahren es außerdem ermöglicht, mindestens einen Ort von Interesse (POI) zu erreichen, der über mehrere Nebenstrecken (4) erreichbar ist, die die Hauptstrecke (1) schneiden, eine globale optimale Strecke POI mittels Durchführung der folgenden Schritte bestimmt wird:

   • Auswerten, für jede der möglichen Nebenstrecken, einer globalen Strecke POI auf der Basis mindestens der folgenden Streckenelemente:

      • eines Hauptstrecken-Nutzabschnitts und einer entsprechenden Valorisierung, wobei die Valorisierung einen Faktor "k" aufweist, wobei der Wert des Faktors "k" zwischen 0,1 und 0,7 und vorzugsweise zwischen 0,3 und 0,5 liegt;
      • der gewählten Nebenstrecke und einer entsprechende Valorisierung;

   • Auswählen aus der Gruppe der ausgewerteten globalen Strecken POI der globalen Strecke POI, deren resultierende Valorisierung optimal ist.

2. Verfahren zur Streckenbestimmung nach Anspruch 1, bei dem die globale Strecke POI aus einer Verbindung des Hauptstrecken-Nutzabschnitts (1) und der gewählten Nebenstrecke (4) besteht.

3. Verfahren zur Streckenbestimmung nach einem der vorhergehenden Ansprüche, bei dem die optimale Valorisierung die geringste ist.

4. Verfahren zur Streckenbestimmung nach einem der vorhergehenden Ansprüche, bei dem die Valorisierung der Fahrzeit entspricht.

5. Verfahren zur Streckenbestimmung nach einem der vorhergehenden Ansprüche, bei dem der Hauptstrecken-Nutzabschnitt am Ausgangspunkt (D) der Hauptstrecke beginnt.

6. Verfahren zur Streckenbestimmung nach einem der vorhergehenden Ansprüche, bei dem der Hauptstrecken-Nutzabschnitt am ersten Schnittpunkt zwischen der Hauptstrecke und einer der möglichen Nebenstrecken beginnt, unter Berücksichtigung der Richtung der Hauptstrecke.

7. Verfahren zur Streckenbestimmung nach einem der vorhergehenden Ansprüche, bei dem das Netz ebenfalls Knoten (3) aufweist, die es in einer Darstellung des Straßennetzes erlauben, mehrere Teilstrecken (2) untereinander zu verbinden.

8. Verfahren zur Streckenbestimmung nach einem der vorhergehenden Ansprüche, bei dem zur Bestimmung der Strecke mehrere mögliche Routen identifiziert werden, von denen ausgehend eine Strecke in Abhängigkeit von gegebenen Kriterien ausgewählt wird, wobei die Identifizierung der mehreren Routen durchgeführt wird, indem ein erstes Modellisierungselement des Straßennetzes, vorzugsweise ein Knoten (3), in der Nähe des Ausgangspunkts (D) und ein zweites Modellisierungselement des Straßennetzes, vorzugsweise ein Knoten (3), in der Nähe des Ankunftspunkts (A) ausgewählt wird, indem mehrere Routen identifiziert werden, die je aus mehreren Routenelementen bestehen, die vom ersten Element zum zweiten Element verbunden sind, und indem mindestens ein Zwischenelement für jede der Routen in der Gruppe von Straßennetz-Modellisierungselementen gesucht wird.

9. Verfahren zur Streckenbestimmung nach einem der Ansprüche 1 bis 8, bei dem die Abtastung der Knoten mit Hilfe des Dijkstra-Algorithmus durchgeführt wird.

10. Verfahren zur Streckenbestimmung nach einem der Ansprüche 1 bis 8, bei dem die Abtastung der Knoten mit Hilfe des FORD-Algorithmus durchgeführt wird.

**11.** Verfahren zur Auswahl von POI für ein digitales Kartographiesystem, bei dem auf der Basis einer Hauptstrecke (1), die es ermöglicht, einen Ausgangspunkt (D), der in einer Datenbank ausgewählt wird, mit einem Ankunftspunkt (A) zu verbinden, der ebenfalls in einer Datenbank ausgewählt wird, wobei die Strecke aus Teilstrecken (2) und ggf. Knoten (3) besteht, die die Teilstrecken verbinden, bei dem mehrere globale Strecken POI verwendet werden, die mit dem Verfahren nach einem der vorhergehenden Ansprüche bestimmt werden, um mehrere POI auszuwählen.

**12.** Softwareprogramm, das Codeelemente aufweist, die für die Anwendung des Verfahrens nach einem der vorhergehenden Ansprüche programmiert sind, wenn das Softwareprogramm in ein EDV-System geladen und von dem EDV-System ausgeführt wird.

**13.** Softwareprogramm nach Anspruch 12 in Form eines auf einem vom einem EDV-System lesbaren Träger aufgezeichneten Produkts, das programmierte Codeelemente aufweist.

**14.** Vorrichtung zur Streckenberechnung, die aufweist:

   - eine Dateneingabeeinheit, die dazu bestimmt ist, die einem Ausgangspunkt zugeordneten Daten und die einem Ankunftspunkt zugeordneten Daten zu empfangen;
   - einen Zugang zu einer Speichereinheit, die eine Gruppe von Modellisierungselementen eines Straßennetzes aufweist;
   - eine Recheneinheit, die eingerichtet ist, um mehrere Routen zu identifizieren, die es je ermöglichen, die Ausgangs- und Ankunftspunkte zu verbinden;
   - Auswertungsmittel, die es ermöglichen, für mehrere mögliche Nebenstrecken, die die Hauptstrecke mit mindestens einem Ort von Interesse verbinden, eine globale Strecke POI auf der Basis mindestens der folgenden Streckenelemente zu ermitteln:

      • eines Hauptstrecken-Nutzabschnitts und einer entsprechenden Valorisierung, wobei die Valorisierung einen Faktor "k" aufweist, wobei der Wert des Faktors "k" zwischen 0,1 und 0,7 und vorzugsweise zwischen 0,3 und 0,5 liegt;
      • der gewählten Nebenstrecke und einer entsprechenden Valorisierung;

   und die es ermöglicht, unter der Gesamtheit der ausgewerteten globalen Strecken POI die globale Strecke POI auszuwählen, deren resultierende Valorisierung optimal ist.

**15.** Vorrichtung nach Anspruch 14, die eine Leiteinheit aufweist, die so eingerichtet ist, dass sie Leitinformationen in Abhängigkeit von den kartographischen Elementen der ausgewählten Route erzeugt.

**16.** EDV-System, das eine Vorrichtung nach einem der Ansprüche 14 oder 15 aufweist.

Fig 1

Fig 2

Fig 3

Fig 4

Fig 5

Fig 6

Fig. 7

Fig. 8

Fig. 9

EP 1 848 965 B1

Fig 10

poi

Lyon

Toulouse

Fig 11